# EUROPEAN PATENT SPECIFICATION

(11) **EP 3 924 091 B1**
(45) Date of publication and mention of the grant of the patent: **28.01.2026**
(21) Application number: 20703233.5
(22) Date of filing: 05.02.2020
(51) Int. Cl.: B01F 23/213, B01F 25/10, B01F 25/25, B01F 25/314, B01F 25/431, F01N 3/20, F01N 3/28, B01F 25/00

(54) **EXHAUST GAS MIXING DEVICE**
ABGASMISCHVORRICHTUNG
DISPOSITIF DE MÉLANGE DE GAZ D'ÉCHAPPEMENT

(30) Priority: 14.02.2019 EP 19157076
(43) Date of publication of application: 22.12.2021
(73) Proprietor: Dinex A/S, 5500 Middelfart (DK); Dongfeng Commercial Vehicle Co., Ltd., Shiyan, Hubei 442001 (CN)
(72) Inventor: BEBE, Jim, Elkjaer, 5500 Middelfart (DK); KORHONEN, Toni, Eero, Mikael, 5500 Middelfart (DK); ANDERSEN, Kasper, Steen, 5500 Middelfart (DK); MÅRTENSSON, Rasmus, Møller, 5500 Middelfart (DK)
(74) Representative: Nex & Phister Law & IP Aps
(86) International application number: PCT/EP2020/052835
(87) International publication number: WO 2020/164986

(56) References cited:
- WO-A1-2008/131562
- WO-A1-2016/044089
- US-A1- 2011 146 253
- US-B1- 10 024 217

## Description

### FIELD OF THE INVENTION

The present invention relates to a device for evaporating liquid spray and subsequent mixing into exhaust gases from a combustion engine. Moreover, the present invention concerns an after-treatment system of the exhaust gases from a combustion engine wherein the device is incorporated. Furthermore, the present invention relates to a vehicle comprising the device of the present invention as well as the after-treatment system. The present invention also concerns use of the device of the present invention for evaporating liquid spray and subsequent mixing into exhaust gases of a combustion engine.

### BACKGROUND OF THE INVENTION

Achieving effective evaporation of aqueous urea solution coming from dosing modules, homogenous mixing of the resulting reductant products like ammonia into the exhaust gas, and thereafter homogenous distribution over the catalytic components is a known challenge in the field of exhaust after-treatment systems. Several inventions have been proposed to achieve this, while minimizing risk of urea deposits, backpressure and space requirement. Exhaust after-treatment systems comprising Selective Catalytic Reduction (SCR) systems may be included downstream of a combustion engine to remove or reduce nitrogen oxides (NOx) emissions coming from an engine. The SCR systems include the introduction of a reductant to the exhaust stream. Mixers are added to help mix the reductant in the exhaust stream. Thorough mixing may help the performance by ensuring a homogeneous distribution of reductant, which enables the catalytic reactions to elapse uniformly across the cross section of the catalyst, thus minimizing ammonia slip and NOx emitted.

Due to space constraints in modem vehicles, it is also important to achieve the above mentioned effects in a compact manner.

US 10024217 B1 discloses a decomposition reactor for an exhaust mixing system, and more particularly a decomposition reactor for an exhaust mixing system arranged in a U manner, i.e., wherein the inlet and outlet of exhaust gases are formed on a same side of the exterior component or housing.

US 2011/0146253 A1 discloses a device for evaporating liquid spray and subsequent mixing into exhaust gases according to the preamble of claim 1.

### SUMMARY OF THE INVENTION

The present invention solves many of the problems of the prior art mixing systems for after-treatment systems, while differentiating itself from existing mixing systems. The result is a mixing system that meets the functionality requirements but can also be employed with different types of dosing modules, with multiple dosing modules, and can be scaled for different catalyst diameters. The present invention concerns a new exhaust mixing system which is a part of the exhaust after-treatment system of a vehicle. In the after-treatment system noxious exhaust gas out of vehicle engines passes through an oxidation catalyst, such as a Diesel Oxidation Catalyst (DOC) and/or a particulate filter, such as a Diesel Particulate Filter (DPF) and then into the exhaust mixing system of the present invention.

Typically, the mixing system evaporates aqueous urea solution into the reductant, ammonia, and mixes reductant well with exhaust gas in a short distance. The mixing system aids in evaporation of aqueous urea droplets and homogenous mixing of evaporated ammonia into the exhaust gas, while minimizing risk of deposits. Homogeneously mixed ammonia in exhaust gas when also homogeneously distributed, with high flow uniformity, over Selective Catalytic Reduction (SCR) catalyst helps in achieving maximum conversion of harmful NOx to harmless nitrogen and water. In this respect, aqueous urea solution may be injected under pressure into the mixing system via the reductant dosing module to form a liquid spray which is allowed to fully evolve prior to impact with metal parts.

The present invention is defined by a device according to claim 1.

Due to the relative arrangement of the mixing chamber, the post-mixing chamber and the outlet of exhaust gases, the walls of the mixing chamber are externally heated by the exhaust gases exiting the post-mixing chamber, thus achieving an aim of compactness while minimizing risks of deposits and/or backpressure.

The mixing system of the present invention can be arranged in a U-manner.

In an embodiment the mixing chamber comprises a swirling baffle which comprises a plurality of openings facing opposite to the outlet of exhaust gases. Preferably, the plurality of openings comprise radial deflecting vanes and outward deflecting vanes. More preferably, the radial deflecting vanes surround the outward deflecting vanes. Even more preferably, the radial and/or the outward deflecting vanes are disposed in a circumferential arrangement.

In a further embodiment the mixing chamber has a flared shape being narrower near the evaporation module and wider at the opposite end. Preferably, exterior walls of the narrower part of the mixing chamber define a fluid passage for the exhaust gases between the post-mixing chamber and the outlet.

In a still further embodiment the mixing chamber further comprises an outlet opening on its bottom part, wherein the bottom part should be understood as the opposite end to the inlet of the mixing chamber. Preferably said outlet opening is at least partially closed by the housing so that the exhaust gases are directed to the post-mixing chamber. More preferably the bottom of the mixing chamber is closed by the housing, so that the exhaust gases are forced to exit the mixing chamber through the swirling baffle.

In a still further embodiment the mixing chamber comprises in its interior a pre-mixing chamber located downstream of the evaporation module and upstream of the swirling baffle.

In a still further embodiment the post-mixing chamber is located between the mixing chamber and a wall of the housing, said wall of the housing being opposite to the outlet of the exhaust gases.

In a still further embodiment the shape of the post-mixing chamber is configured to conduct and accelerate the flow of exhaust gases around the exterior of the mixing chamber.

According to the invention the mixing chamber is arranged following the direction of the flow of exhaust gases coming from the evaporation module, the mixing chamber being tilted in relation to the housing.

In a still further embodiment the evaporation module comprises a plurality of parallel evaporation vanes for guiding the flow of exhaust gases towards the mixing chamber. Preferably said evaporation vanes also serve as impingement surface for droplets of the liquid spray and enhance the evaporation of the liquid spray into the exhaust gases. Preferably the evaporation vanes are bent.

In a still further embodiment the mixing chamber further comprises a V-shaped vane for distributing the liquid spray and gaseous reductant circumferentially along a primary axis of the evaporation module. Preferably the V-shaped vane comprises two asymmetrical orifices for letting the exhaust gas pass through, each orifice being on opposite sides of the V-shaped vane and asymmetrically distributed. In particular, the V-shaped vane may create two asymmetrical orifices. In this way, a more uniform flow is created within the mixing chamber. More preferably said orifices take the form of recesses along the profile of the side of the V-shaped vane. Even more preferably the V-shaped vane is located upstream of the swirling baffle.

In a still further embodiment the housing is U-shaped.

In a still further embodiment the flow collector, the evaporation module, the mixing chamber and the post-mixing chamber are located within the housing of the device.

In a still further embodiment the flow collector, the evaporation module and the mixing chamber constitute a single piece which is introduced within the housing.

In a still further embodiment the flow collector, the evaporation module and the mixing chamber define a single flow path of the exhaust gases.

In a still further embodiment the device further comprises an outlet zone located between the mixing chamber and the outlet of the exhaust gases.

In a still further embodiment the device further comprises a dosing module for inserting the liquid into the exhaust gases located between the inlet of the exhaust gases and the evaporation module. Preferably the dosing module is located upstream of the flow collector. More preferably said dosing module is angled towards the inlet of the exhaust gases. Even more preferably the dosing module further comprises an injection protection attachment.

In a still further embodiment the dosing module is a pressure atomizer. Alternatively the dosing module is an air-assisted atomizer.

In a still further embodiment the device further comprises at least one additional dosing module. Typically, two or more dosing modules may be present.

The device is preferably made of stainless steel, which is resistant to urea corrosion, has a low thermal expansion and has a good formability and weldability. However, other materials having similar properties can also be used.

In a second aspect the present invention relates to an after-treatment system of the exhaust gases from a combustion engine which comprises at least one device of the present invention as well as any one of the above embodiments.

In an embodiment of the second aspect the after-treatment system further comprises a particulate filter. Typically, a Diesel Particulate Filter (DPF).

In a further embodiment of the second aspect the after-treatment system further comprises a Selective Catalytic Reduction (SCR) catalyst. Typically, the SCR catalyst is on filter.

In a still further embodiment of the second aspect the after-treatment system further comprises an Oxidation Catalyst, such as a Diesel Oxidation Catalyst (DOC).

In a further embodiment of the second aspect the after-treatment system further comprises an Ammonia Slip Catalyst (ASC).

In a still further embodiment of the second aspect the after-treatment system is arranged in a switchback or U-manner.

In a third aspect the present invention relates to the use of at least one device of the present invention as well as any one of the above embodiments for evaporating liquid spray and subsequent mixing into exhaust gases of a combustion engine.

In an embodiment the combustion engine is a Diesel engine.

In another embodiment the combustion engine is an Otto engine.

In a further embodiment the combustion engine is an Atkinson engine.

In a fourth aspect the present invention relates to a vehicle which comprises an after-treatment system of the present invention as well as any one of the above embodiments.

In an embodiment the vehicle is powered by a Diesel engine.

In another embodiment the vehicle is powered by an Otto engine.

In a further embodiment the vehicle is powered by an Atkinson engine.

Further objects and advantages of the present invention will appear from the following description, and claims.

### BRIEF DESCRIPTION OF DRAWINGS

Figure 1 is a schematic illustration of an after-treatment system comprising the device of the present invention for evaporating liquid spray and subsequent mixing of reductant into exhaust gases from a combustion engine.
Figure 2 is a perspective view of an embodiment of the device of the present invention for evaporating liquid spray and subsequent mixing of reductant into exhaust gases from a combustion engine.
Figure 3 is a perspective view in a cross section of an embodiment of the mixing device of the present invention.
Figure 4 is a cross-section view of an embodiment of the mixing device of the present invention.
Figure 5 is an exploded perspective view of a flow collector, an evaporation module and a mixing chamber of an embodiment of the mixing device of the present invention.
Figure 6 shows the graphic results of a computational fluid dynamics simulation of an embodiment of the mixing device of the present invention.
Figure 7 is a perspective view of a flow collector of an embodiment of the mixing device of the present invention.
Figure 8 is a perspective view of an evaporation module of an embodiment of the mixing device of the present invention.
Figure 9 is a front, top, lateral and perspective view of a V-shaped vane of an embodiment of the mixing device of the present invention.
Figure 10 is an exploded perspective view of a mixing chamber of an embodiment of the mixing device of the present invention.
Figure 11 is a top view of a mixing chamber of an embodiment of the mixing device of the present invention.
Figure 12 illustrates the assembly of an embodiment of the mixing device of the present invention.

### DESCRIPTION OF THE INVENTION

There are many advantages of the present invention in a broad context as well as even more advantageous aspects of the embodiments.

Achieving effective evaporation of aqueous urea droplets coming from dosing modules, homogenous mixing of these evaporated urea components and consequent reductant products like ammonia into the exhaust gas, and thereafter homogeneous distribution over the catalytic component is a known problem in the field of the present invention. Multiple inventions have been proposed to achieve this, while minimizing risk of urea deposits, minimizing backpressure and minimizing space requirements.

The present invention achieves all the above, while differentiating itself from existing mixing devices. The result is a mixing system that meets the functionality requirements, but can also be employed with multiple different types of dosing modules, with multiple dosing modules, can be scaled for different catalyst diameters and is easy to manufacture.

The term "a liquid" as used herein refers to a liquid suitable for forming a reductant reducing the noxious gases, such as DEF (Diesel Exhaust Fluid), and urea water solution.

The term "swirling baffle" as used herein refers to a wall with an opening for creating swirling of the gases.

As mentioned herein the swirling baffle may comprise a plurality of radial deflecting vanes. The plurality refers to two or more radial deflecting vanes, and typically 5-20 radial deflecting vanes, such as 12 radial deflecting vanes. More radial deflecting vanes may be contemplated depending on the dimensions hereof.

As mentioned herein the swirling baffle may comprise a plurality of outward deflecting vanes. The plurality refers to two or more outward deflecting vanes, and typically 2-8 outward deflecting vanes, such as 6 outward deflecting vanes. More outward deflecting vanes may be contemplated depending on the dimensions hereof.

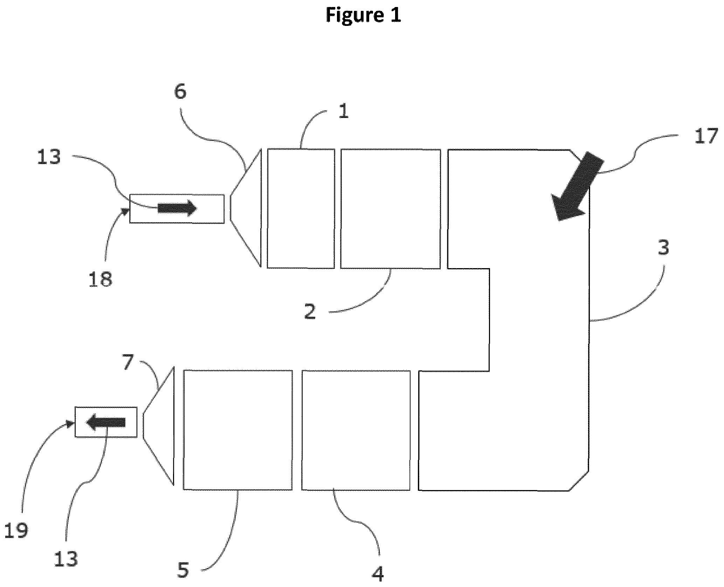

The device and system according to the present invention will now be described in more detail with regard to the accompanying figures 1-12. The figures show one way of implementing the present invention and is not to be construed as being limiting the present invention in any way.

The material to be used can be stainless steel, which has low thermal expansion, is urea corrosion resistant and has good formability and weldability. However, other suitable materials can be used.

Figure 1 schematically illustrates an after-treatment system having an inlet (18) for exhaust gases of a combustion engine entering the after-treatment system, wherein the arrow (13) indicates the exhaust stream direction. During operation the exhaust gases enter an inlet module (6), then a Diesel Oxidation Catalyst (1) and hereafter a Diesel Particulate Filter (2). The device (3) for evaporating liquid spray, such as a reductant, and subsequent mixing into exhaust gases from a combustion engine is located after the Diesel Particulate Filter (2) and before a Selective Catalytic Reduction catalyst (4) after which there is an SCR with ammonia slip catalyst zone (5). Hereafter, the treated exhaust gases leave the after-treatment system first through an outlet module (7) and then through an outlet (19) with a flow direction (13) as shown, which, as can be seen, due to the arrangement of the after-treatment system in a U-manner, is opposite to the one in the inlet (18).

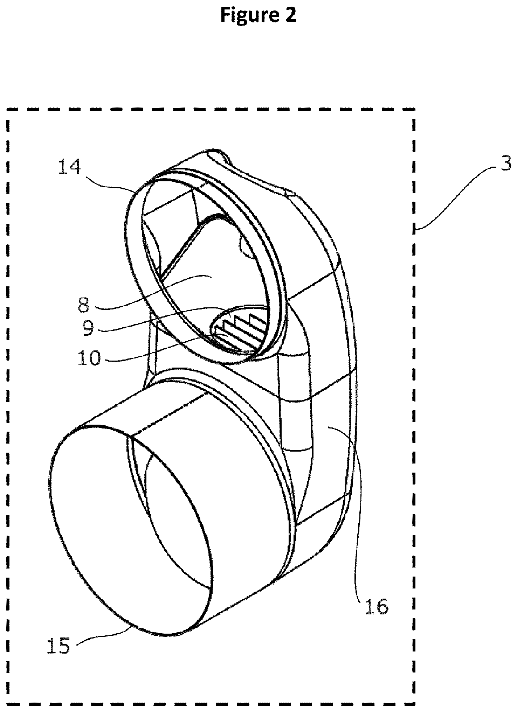

Figure 2 shows a perspective view an embodiment of a device (3) for evaporating liquid spray and subsequent mixing into exhaust gases of a combustion engine, or simply, mixing device (3) or exhaust gas mixing device (3). The mixing device (3) comprises a housing (16), which, in the embodiment shown, is U-shaped. Said housing (16) comprises an inlet (14) and an outlet (15), which in this case, are both cylindrical. In other embodiments of the mixing device (3) the inlet (14) and/or the outlet (15) can have other geometric configurations, such as triangular, rectangular, hexagonal, octagonal, etc. Through the inlet (14) it can be partially seen the flow collector (8) and the evaporation module (9) with its vanes (10), which will be described hereinafter.

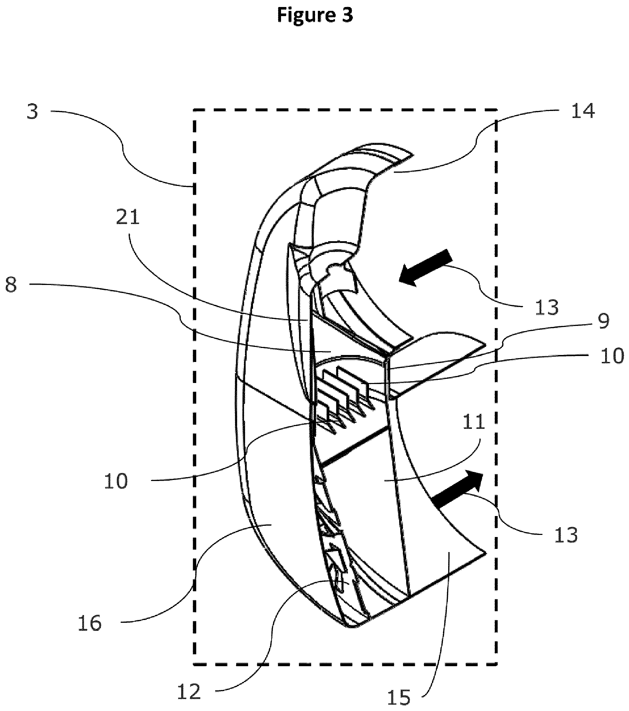

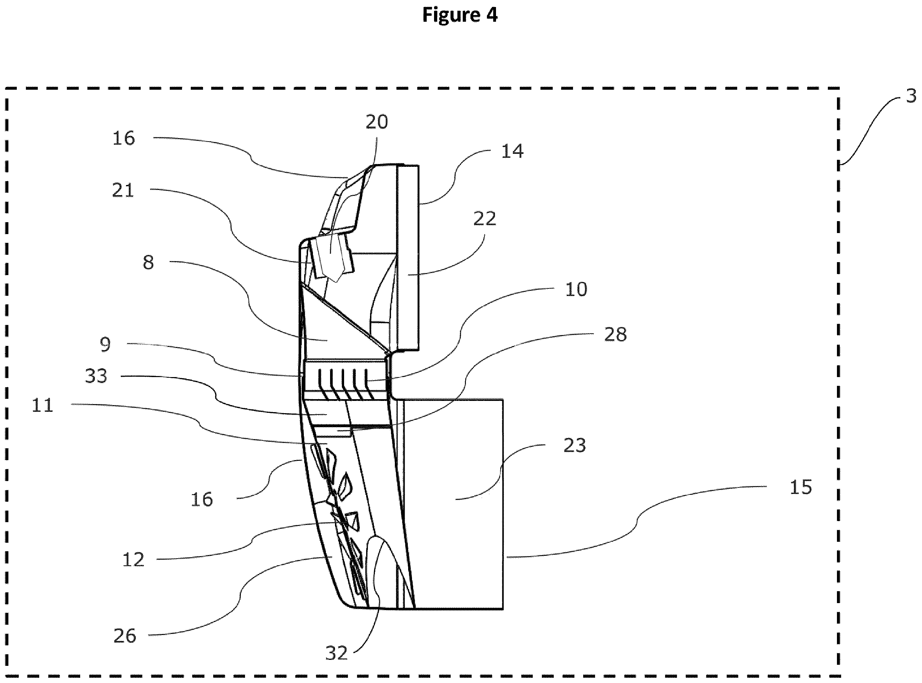

Figures 3 and 4 show a longitudinal cross-section of a perspective view and a side view, respectively, of two different embodiments of a mixing device (3) according to the present invention. A difference between both embodiments is that the embodiment shown in Figure 3 lacks of a V-shaped vane (28). With the exception of the V-shaped vane (28), the following description is equally valid for both embodiments. Exhaust gas (13) enters the mixing device (3) through its inlet (14) and moves to the flow collector (8) that directs the flow of exhaust gas (13) to the evaporation module (9) while increasing its velocity. The flow collector (8), together with the housing (16), is shaped such that when the exhaust gas (13) enters the evaporation module (9) its direction is substantially perpendicular to the one at the inlet (14) of the exhaust mixing device (3).

In the embodiments shown, an air-assisted reductant dosing module (20) is arranged in the housing (16) of the exhaust mixing device (3), wherein a liquid, such as an aqueous urea solution, in particular urea water solution, is inserted into the exhaust gas (13) during operation, so that at least some of the exhaust gas (13) mixed with solution of urea impinges the vanes (10) of the evaporation module (9), where it subsequently evaporates to form gaseous ammonia. A dosing module injection protection attachment (21) is indicated for protection of the aqueous urea solution spray from the dosing module (20). Although in these embodiments the dosing module (20) is an air-assisted atomizer, in other embodiments it can be, for example, a pressure atomizer. As can be seen, in the embodiments shown the dosing module (20) is angled towards the inlet (14) of exhaust gas (13). This arrangement is particularly advantageous. However, in other embodiments the dosing module (20) may be substantially perpendicular to the direction of the exhaust gas (13) when entering the mixing device (3) through the inlet (14).

Downstream the evaporation module (9) there is a mixing chamber (11), the mixing chamber being fluidly connected to the evaporation module (9). As can be seen, the outlet parts of the evaporation vanes (10) are bent so that the flow of exhaust gas (13) is directed towards the mixing chamber (11). The mixing chamber (11) of the embodiments shown comprises a swirling baffle (12) facing opposite to the outlet (15) of exhaust gases of the mixing device (3) and a further outlet opening (32) located on its bottom part, i.e. the part opposite to the fluid connection between the evaporation module (9) and the mixing chamber (11), which is closed by the housing. In these embodiments the perimeter of the outlet opening (32) is shaped such that is in close contact with the housing, thereby closing said outlet opening (32). However, in other embodiments said outlet opening (32) can be only partially closed, so that the exhaust gases exiting the mixing chamber trough said outlet opening (32) are directed to the post-mixing chamber (26). On its upper zone, i.e. where the inlet is arranged, the mixing chamber (11) may comprise a pre-mixing chamber (33) located downstream of the evaporation module (9) and upstream of the swirling baffle (12).

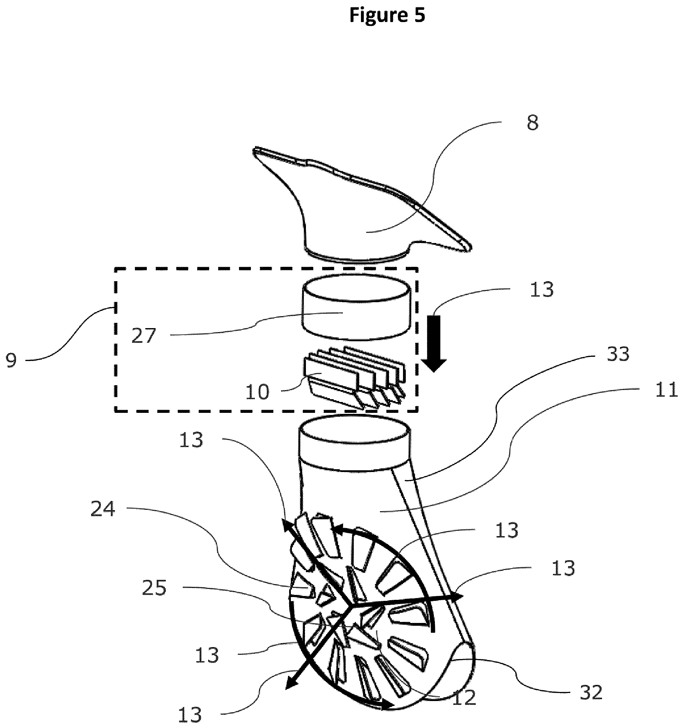

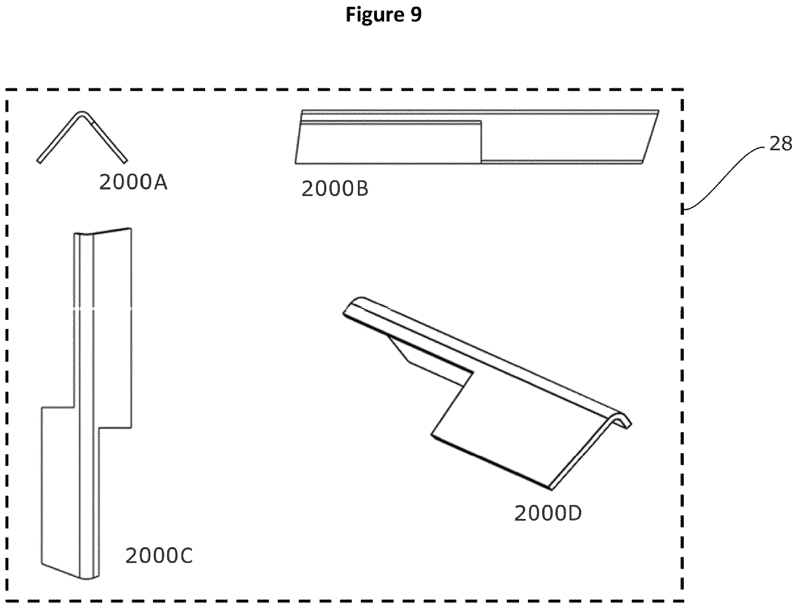

Although completely optional, in the embodiment shown in Figure 4 the mixing chamber (11) further comprises a V-shaped vane (28) that aids in distributing the liquid spray, in this embodiment gaseous ammonia, circumferentially along a primary axis of the evaporation module (9), see Figure 5. The V-shaped vane (28) is a rectangular plate bent along its longitudinal axis, which comprises two asymmetrical orifices, for example, in the form of indentations or recesses, each orifice being on opposite sides of the V-shaped vane (28). If the orifices were located on the same side of the V-shaped vane (28), the flow of exhaust gases would at least partly by-pass the V-shaped vane (28) and the effect achieved would be greatly reduced. Said indentations are preferably rectangular. The V-shaped vane (28) is preferably located upstream of the swirling baffle (12), and more precisely, in the pre-mixing chamber (33). A V-shaped vane (28) can be seen with more clarity in Figure 9. As stated hereinabove, the embodiment shown in Figure 3 lacks of a V-shaped vane (28).

The mixing chamber (11) gives access to the post-mixing chamber (26), which is in fluid connection with the outlet (15) of exhaust gases. As can be seen, the mixing chamber (11) is physically located between the post-mixing chamber (26) and the outlet (15) of exhaust gases, so that the fluid connection between the post-mixing chamber (26) and the outlet (15) surrounds an exterior of the mixing chamber (11). Due to the relative arrangement of the mixing chamber (11), post-mixing chamber (26) and the outlet (15), the walls of the mixing chamber (11) are externally heated by the exhaust gases exiting the post-mixing chamber (26) without need of any by-pass or similar, thus achieving the aim of compactness while minimizing the risks of deposits, i.e. crystallized urea deposits, and/or blockages which would increase the backpressure. Moreover, the mixing chamber (11) is tilted towards the outlet (15) of exhaust gases, thereby increasing its longitude, which aids in the mixing of the exhaust gases with the liquid injected by the dosing module (20), and creating room for a post-mixing chamber (26) within a compact housing (16).

In the embodiment shown the post-mixing chamber (26) is located between the mixing chamber (11) and a wall of the housing (16), more precisely, between the mixing chamber (11) and the posterior wall of the housing (16), said posterior wall being the one opposite to the inlet (14) and outlet (15) of the exhaust mixing device (3). Said posterior wall of the housing (16) is preferably non-flat, e.g. curved. A non-flat posterior wall aids in increasing the structural rigidity of the housing (16).

In the embodiment shown the housing (16) defines an inlet zone (22) and an outlet zone (23) next to the inlet (14) and the outlet (15) of exhaust gases, respectively.

Figure 5 shows an exploded perspective view of a flow collector (8), an evaporation module (9) and a mixing chamber (11) of an embodiment of a mixing device according to the present invention. The evaporation vanes (10) and the fixation ring (27) comprised in the evaporation module (9) can clearly be seen thanks to this exploded view. The mixing chamber of the embodiment shown has a flared shape being narrower near the evaporation module (9) and wider at the opposite end. The swirling baffle (12) of the mixing chamber (11) comprises a plurality of radial deflecting vanes (24) and a plurality of outward deflecting vanes (25), both arranged in a circular manner and facing opposite to the outlet (15) of exhaust gases, see Figures 3 and 4. The arrows schematically show the direction of the exhaust gas (13) when exiting the mixing chamber (11) through the swirling baffle (12), and more precisely, when exiting the mixing chamber (11) through the radial deflecting vanes (24) and the outward deflecting vanes (25). The outward deflecting vanes direct the exhaust gases to the post-mixing chamber in a substantially outward swirl motion, whereas the radial deflecting vanes (24) direct the exhaust gases to the post-mixing chamber in a substantially radial swirl motion. The combination of both effects increases the mix of the exhaust gases.

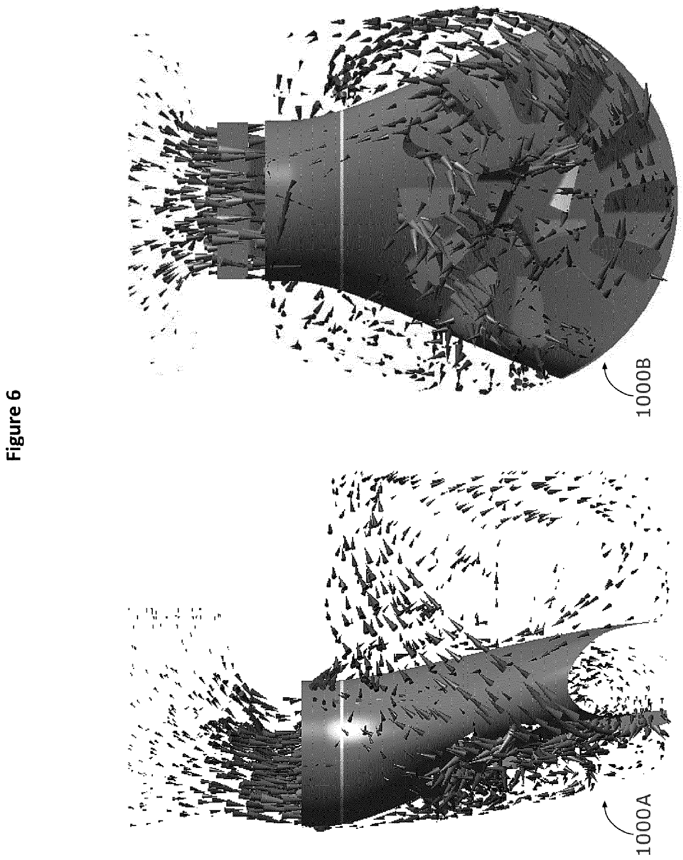

The dynamics of the exhaust gases when flowing through the mixing device (3) of the claimed invention can clearly be seen in Figure 6, which shows the graphical results generated by a Computational Fluid Dynamics (CFD) simulation from a side view (1000A) and a back view (1000B). Although in both views only the mixing chamber has been represented, the simulation was made taking into account all the different elements comprised in the mixing device (3) shown in Figure 3. The description will be made with reference to the elements shown in Figure 3. The flow collector (8) collects the flow of exhaust gas entering through the inlet (14) and increases its velocity while directing it to the evaporation module (9), wherein the evaporation vanes (10) guide it to the interior of the mixing chamber (11). The exhaust gases exit the mixing chamber (11) through the swirling baffle (12), i.e. the plurality of radial deflecting vanes (24) and outward deflecting vanes (25), since the bottom outlet (32) is closed by the housing (16). The flow exiting the mixing chamber (11) is directed to the post-mixing chamber (26). At the post-mixing chamber (26) the flow is directed to the outlet (15) while being accelerated and surrounding the exterior of the mixing chamber (11), thus further encouraging exhaust gas mixing. The swirl motion of the exhaust gas in the post-mixing chamber (26) enhances the exhaust gas mixing and sweeps any possible deposit of crystallized urea or similar. In the side view (1000A) it may seem that part of the flow exits the mixing chamber (11) through the opening (32). However, this is just a visual effect. In reality the housing (16) directs the flow to the radial deflecting vanes (24) located on the bottom of the swirling baffle (12) of the mixing chamber (11). This can be seen in the back view (1000B).

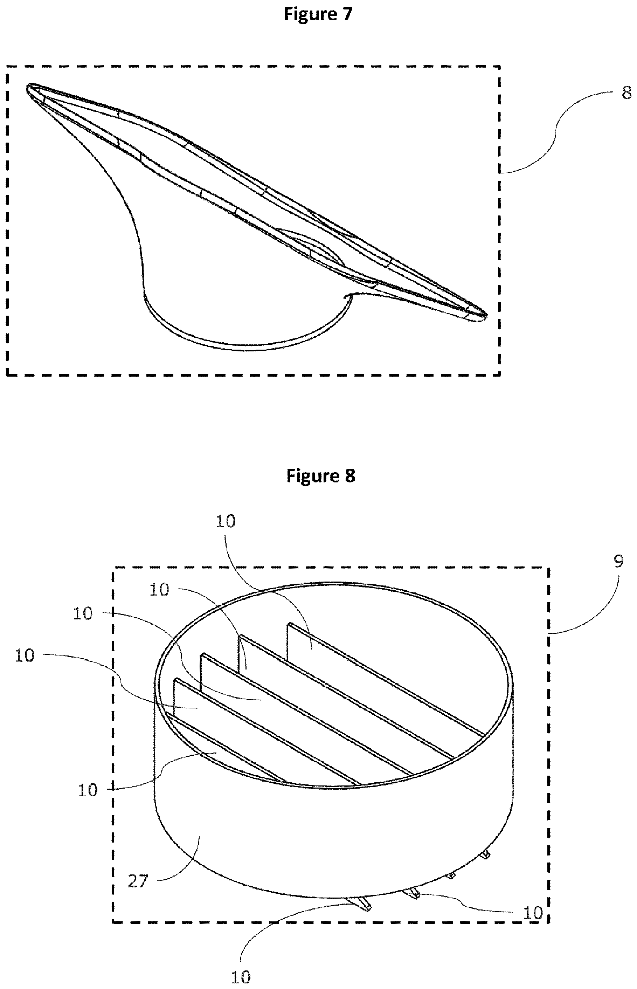

Figure 7 shows a perspective view of a flow collector (8) of a mixing device according to the present invention. The flow collector acts as a nozzle, and although in the embodiment shown its inlet is of rectangular shape, in other embodiments the inlet can have other geometric configurations, such as triangular, oval, ellipsoid, hexagonal, octagonal, etc. The outlet of the flow collector (8) must have the same geometric configuration as the evaporation module. Said configuration is preferably cylindrical. The flow collector (8) is preferably pressed, trimmed and welded together with the mixing chamber (9) and the evaporation module (9) forming a single piece, referred as mixing subassembly.

Figure 8 shows a perspective view of an evaporation module (9) of a mixing device according to the present invention. The evaporation module (9) comprises a fixation ring (27) into which evaporation vanes (10) are inserted. Evaporation vanes (10) are preferably cut and pressed into shape. Evaporation vanes (10) are preferably parallel to each other.

Figure 9 shows a side (2000A), front (2000B), top (2000C) and perspective (2000D) view of a V-shaped vane (28) of a mixing device (3) according to the present invention. The V-shaped vane (28) of the embodiment shown is a rectangular plate bent along its longitudinal axis and which comprises two rectangular recesses located on opposite sides of the V-shaped vane (28), said recesses being asymmetrically distributed, that is to say, for example, when viewed from above (2000C) one recess is on the upper left part of the V-shaped vane (28) and the other one is on the lower right part of it.

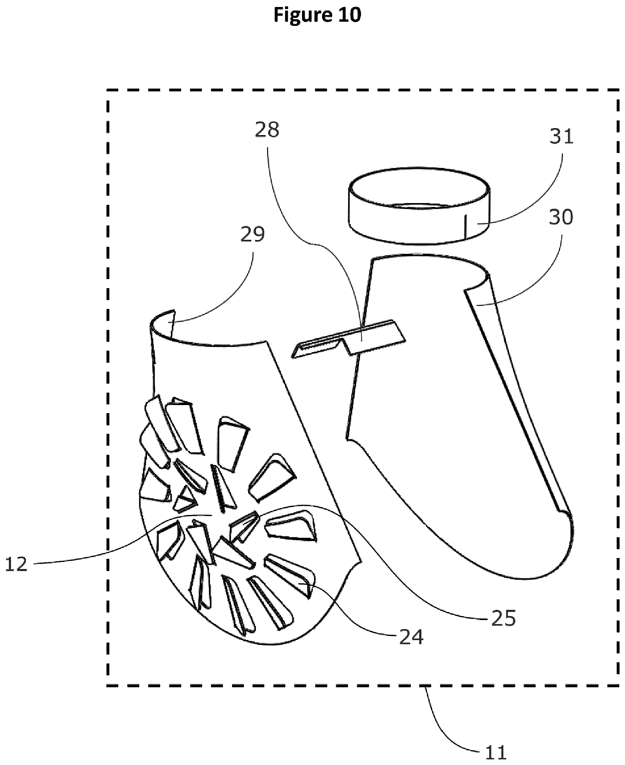

Figure 10 shows an exploded perspective view of a mixing chamber (11) of a mixing device (3) according to the present invention. The mixing device (11) of the embodiment shown comprises a pipe section (31), a V-shaped vane (28), a back-side part (29) and a catalyst-side part (30). The back-side part (29), which is intended to face the post-mixing chamber (26), see Figures 3 and 4, comprises the swirling baffle (12), which in turn comprises the plurality of radial deflecting vanes (24) and outward deflecting vanes (25).

The mixing chamber (11) may be assembled from two pressed parts (29, 30) and one cylindrical section (31). The back-side part (29) may be pressed and then the deflecting vanes (24, 25) of the swirling baffle (12) can be laser cut or punched. After being cut or punched, the vanes may be pressed and subsequently trimmed. The catalyst-side part (30) can be pressed in one go. In a similar way to the deflecting vanes (24, 25) of the swirling baffle (12), the recesses of the V-shaped vane (28) can be punched or laser cut. Once the back-side part (29), the catalyst-side part (30) and the V-shaped vane (28) are prepared, the V-shaped vane (28) may be positioned in either one of the two parts (29, 30) and welded to it. Subsequently, the V-shaped vane (28) may be welded to the other part and both parts (29, 30) can be welded together. After this, a pipe section (31) can be welded on the upper side to serve as a connection interface to the evaporation module (9). Once the flow collector (8), the evaporation module (9) and the mixing chamber (11) are assembled, they can be joined together, preferably by welding, thereby forming the mixing subassembly.

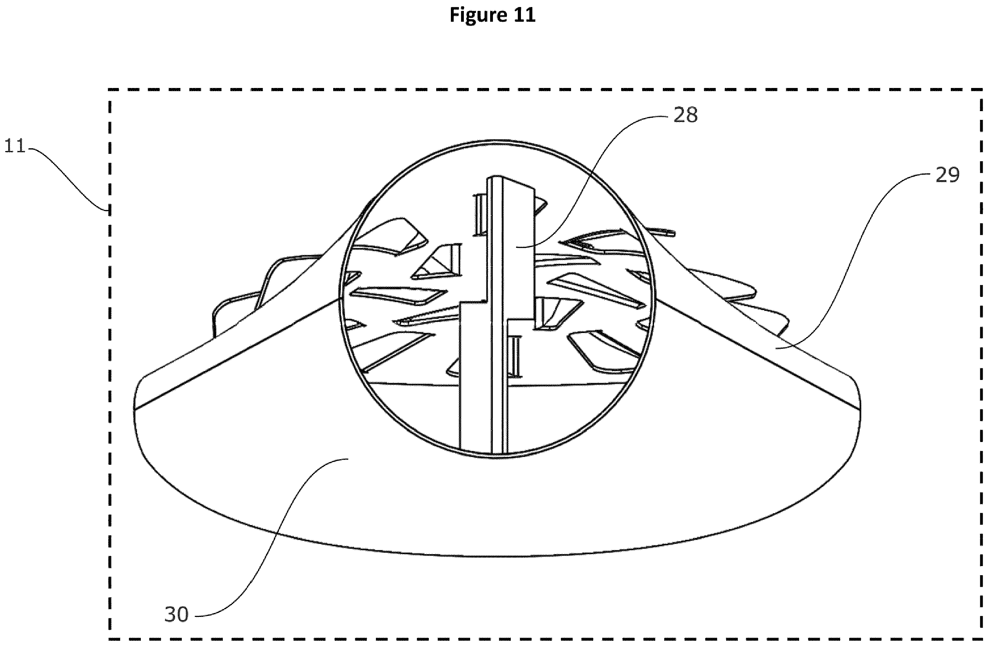

Figure 11 shows a tope view of an assembled mixing chamber (11) of an embodiment of a mixing device according to the present invention. As can be seen, the V-shaped vane (28) is diametrically arranged in relation with the inlet of the mixing chamber (11).

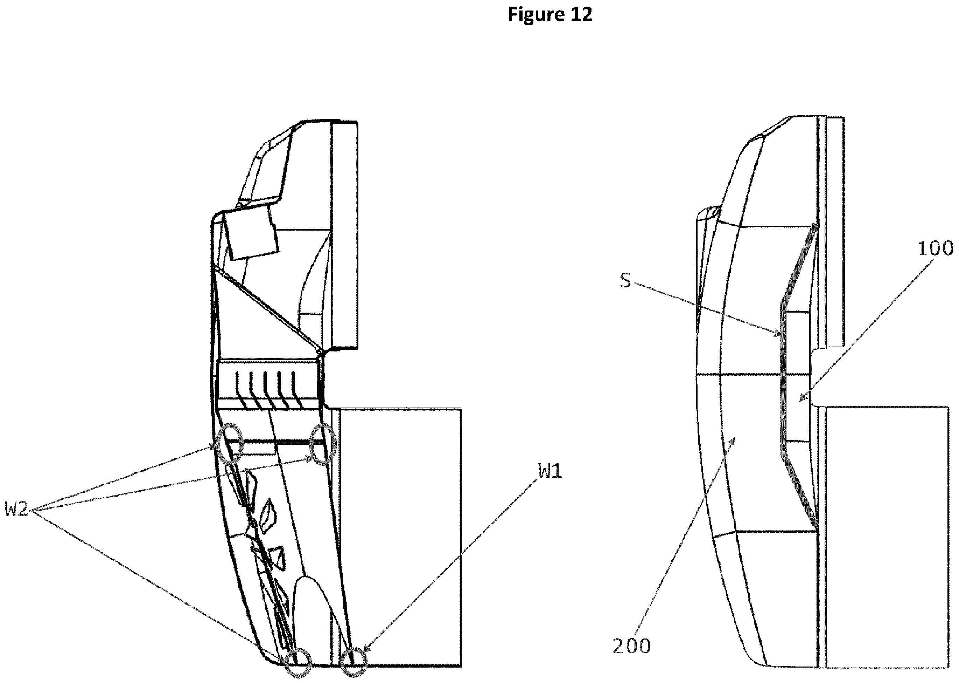

Figure 12 illustrates the assembly process of an embodiment of a mixing device according to the present invention. The mixing subassembly can be inserted into the back half (200) of the housing (16), which can be obtained by pressing. The mixing chamber (11) may further comprise tabs configured to protrude through respective slots in the housing (16) of the mixing device, so that they can be welded from the outside. These welds are represented by (W2) in Figure 10. Once the back half (200) and the mixing subassembly are welded together, the front half (100) may be joined to the back half (200), preferably by welding. The welding line between the front half (100) and the back half (200) is illustrated by reference numeral (S). The next step in the assembly process may consist in performing the welding (W1) that joins the mixing chamber (11) to the front half (100) of the housing (16). Said weld (W1) is preferably performed through the outlet (15) of the mixing system.

All headings and sub-headings are used herein for convenience only and should not be construed as limiting the invention in any way.

Recitation of ranges of values herein are merely intended to serve as a short method of referring individually to each separate value falling within the range, unless other-wise indicated herein, and each separate value is incorporated into the specification as if it were individually recited herein. Unless otherwise stated, all exact values provided herein are representative of corresponding approximate values (*e.g.,* all exact exemplary values provided with respect to a particular factor or measurement can be considered to also provide a corresponding approximate measurement, modified by "about", where appropriate).

All methods described herein can be performed in any suitable order unless otherwise indicated herein or otherwise clearly contradicted by context.

The terms "a" and "an" and "the" and similar referents as used in the context of describing the invention are to be construed to insert both the singular and the plural, unless otherwise indicated herein or clearly contradicted by context. Thus, "a" and "an" and "the" may mean at least one, or one or more.

The term "and/or" as used herein is intended to mean both alternatives as well as each of the alternatives individually. For instance, expression "xxx and/or yyy" means "the xxx and yyy; the xxx; or the yyy", all three alternatives are subject to individual embodiments.

The use of any and all examples, or exemplary language (*e.g*., "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation of patent documents herein is done for convenience only and does not reflect any view of the validity, patentability and/or enforceability of such patent documents.

The description herein of any aspect or embodiment of the invention using terms such as "comprising", "having", "including" or "containing" with reference to an element or elements is intended to provide support for a similar aspect or embodiment of the invention that "consists of", "consists essentially of", or "substantially comprises" that particular element or elements, unless otherwise stated or clearly contradicted by context (*e.g*., a composition described herein as comprising a particular element should be understood as also describing a composition consisting of that element, unless otherwise stated or clearly contradicted by context).

## Claims

1. Device (3) for evaporating liquid spray and subsequent mixing into exhaust gases (13) from a combustion engine comprising a housing (16) which comprises an inlet (14) of the exhaust gases (13) and an outlet (15) of the exhaust gases (13) arranged both on a same side of the housing (16), and further comprising:
a flow collector (8) for directing the exhaust gases (13) into an evaporation module (9),
and a mixing chamber (11) located downstream of the evaporation module (9),
the evaporation module (9) being fluidly connected and giving access to an interior of the mixing chamber (11),
the mixing chamber (11) giving access to a post-mixing chamber (26), the post-mixing chamber (26) having a fluid connection to the outlet (15) of the exhaust gases (13),
wherein the mixing chamber (11) is physically located between the post-mixing chamber (26) and the outlet (15) of exhaust gases (13), so that the fluid connection between the post-mixing chamber (26) and the outlet (15) surrounds an exterior of the mixing chamber (11),
and wherein the mixing chamber (11) is arranged following the direction of the flow of exhaust gases (13) coming from the evaporation module (9), **characterized in** the mixing chamber (11) being tilted in relation to the housing (16).

2. Device (3) according to claim 1, **characterised in that** the mixing chamber (11) comprises a swirling baffle (12) which comprises a plurality of openings facing opposite to the outlet (15) of exhaust gases (13).

3. Device (3) according to claim 2, **characterised in that** the plurality of openings comprise radial deflecting vanes (24) and outward deflecting vanes (25).

4. Device (3) according to claim 3, **characterised in that** the radial deflecting vanes (24) surround the outward deflecting vanes (25).

5. Device (3) according to claim 3 or 4, **characterised in that** the radial and/or the outward deflecting vanes (24, 25) are disposed in a circumferential arrangement.

6. Device (3) according to any one of the preceding claims, **characterised in that** the mixing chamber (11) has a flared shape being narrower near the evaporation module (9) and wider at the opposite end.

7. Device (3) according to claim 6, wherein exterior walls of the narrower part of the mixing chamber (11) define a fluid passage for the exhaust gases (13) between the post-mixing chamber (26) and the outlet (15).

8. Device (3) according to any one of claims 2 to 7, **characterised in that** the mixing chamber (11) comprises in its interior a pre-mixing chamber (33) located downstream of the evaporation module (9) and upstream of the swirling baffle (12).

9. Device (3) according to any one of the preceding claims, **characterised in that** the post-mixing chamber (26) is located between the mixing chamber (11) and a wall of the housing (16).

10. Device (3) according to any one of the preceding claims, **characterised in that** the shape of the post-mixing chamber (26) is configured to conduct and accelerate the flow of exhaust gases (13) around the exterior of the mixing chamber (11).

11. Device (3) according to any one of the preceding claims, **characterised in that** the evaporation module (9) comprises a plurality of parallel evaporation vanes (10) for guiding the flow of exhaust gases (13) towards the mixing chamber (11) and for serving as impingement surface for droplets of the liquid spray and enhancing the evaporation of the liquid spray into the exhaust gases (13).

12. Device (3) according to any one of the preceding claims, **characterised in that** the housing (16) is U-shaped.

13. Device (3) according to any one of the preceding claims, **characterised in that** the flow collector (8), the evaporation module (9), the mixing chamber (11) and the post-mixing chamber (26) are located within the housing (16) of the device (3).

14. Device (3) according to any one of the preceding claims, **characterised in that** the flow collector (8), the evaporation module (9) and the mixing chamber (11) define a single flow path of the exhaust gases (13).

15. Device (3) according to any one of the preceding claims, **characterised in that** it further comprises an outlet zone (23) located between the mixing chamber (11) and the outlet (15) of the exhaust gases (13).

16. Device (3) according to any of the preceding claims, **characterised in that** it further comprises a dosing module (20) for inserting the liquid into the exhaust gases (13) located between the inlet (14) of the exhaust gases (13) and the evaporation module (9).

## Patentansprüche

1. Vorrichtung (3) zum Verdampfen von Flüssigkeitsspray und anschließenden Einmischen in Abgase (13) aus einem Verbrennungsmotor, umfassend ein Gehäuse (16), das einen Einlass (14) der Abgase (13) und einen Auslass (15) der Abgase (13) umfasst, die beide auf derselben Seite des Gehäuses (16) angeordnet sind, und ferner umfassend:
einen Strömungssammler (8) zum Leiten der Abgase (13) in
ein Verdampfungsmodul (9),
und eine Mischkammer (11), die stromabwärts des Verdampfungsmoduls (9) angeordnet ist,
wobei das Verdampfungsmodul (9) fluidisch verbunden ist mit und Zugang ermöglicht zu einem Inneren der Mischkammer (11),
wobei die Mischkammer (11) Zugang zu einer Nachmischkammer (26) ermöglicht, wobei die Nachmischkammer (26) eine Fluidverbindung zum Auslass (15) der Abgase (13) hat,
wobei die Mischkammer (11) physisch zwischen der Nachmischkammer (26) und dem Auslass (15) von Abgasen (13) angeordnet ist, so dass die Fluidverbindung zwischen der Nachmischkammer (26) und dem Auslass (15) eine Außenseite der Mischkammer (11) umgibt,
und wobei die Mischkammer (11) entlang der Richtung des Stroms von Abgasen (13) angeordnet ist, die von dem Verdampfungsmodul (9) kommen, **dadurch gekennzeichnet, dass** die Mischkammer (11) in Bezug auf das Gehäuse (16) geneigt ist.

2. Vorrichtung (3) nach Anspruch 1, **dadurch gekennzeichnet, dass** die Mischkammer (11) eine Verwirbelungsablenkplatte (12) umfasst, welche eine Vielzahl von Öffnungen umfasst, die dem Auslass (15) von Abgasen (13) gegenüberliegen.

3. Vorrichtung (3) nach Anspruch 2, **dadurch gekennzeichnet, dass** die Vielzahl von Öffnungen radial umlenkende Schaufeln (24) und nach außen umlenkende Schaufeln (25) umfassen.

4. Vorrichtung (3) nach Anspruch 3, **dadurch gekennzeichnet, dass** die radial umlenkenden Schaufeln (24) die nach außen umlenkenden Schaufeln (25) umgeben.

5. Vorrichtung (3) nach Anspruch 3 oder 4, **dadurch gekennzeichnet, dass** die radial und/oder die nach außen umlenkenden Schaufeln (24, 25) in einer Umfangsanordnung angeordnet sind.

6. Vorrichtung (3) nach einem der vorhergehenden Ansprüche, **dadurch gekennzeichnet, dass** die Mischkammer (11) eine aufgeweitete Form hat, die in der Nähe des Verdampfungsmoduls (9) enger und am gegenüberliegenden Ende breiter ist.

7. Vorrichtung (3) nach Anspruch 6, wobei Außenwände des engeren Teils der Mischkammer (11) einen Fluiddurchlass für die Abgase (13) zwischen der Nachmischkammer (26) und dem Auslass (15) definieren.

8. Vorrichtung (3) nach einem der Ansprüche 2 bis 7, **dadurch gekennzeichnet, dass** die Mischkammer (11) in ihrem Inneren eine Vormischkammer (33) umfasst, die stromabwärts des Verdampfungsmoduls (9) und stromaufwärts der Verwirbelungsablenkplatte (12) angeordnet ist.

9. Vorrichtung (3) nach einem der vorhergehenden Ansprüche, **dadurch gekennzeichnet, dass** die Nachmischkammer (26) zwischen der Mischkammer (11) und einer Wand des Gehäuses (16) angeordnet ist.

10. Vorrichtung (3) nach einem der vorhergehenden Ansprüche, **dadurch gekennzeichnet, dass** die Form der Nachmischkammer (26) konfiguriert ist, um den Strom von Abgasen (13) um die Außenseite der Mischkammer (11) herumzuleiten und zu beschleunigen.

11. Vorrichtung (3) nach einem der vorhergehenden Ansprüche, **dadurch gekennzeichnet, dass** das Verdampfungsmodul (9) eine Vielzahl von parallelen Verdampfungsschaufeln (10) umfasst, um den Strom von Abgasen (13) in Richtung zur Mischkammer (11) zu leiten und als Aufprallfläche für Tröpfchen des Flüssigkeitssprays zu dienen und die Verdampfung des Flüssigkeitssprays in die Abgase (13) zu verbessern.

12. Vorrichtung (3) nach einem der vorhergehenden Ansprüche, **dadurch gekennzeichnet, dass** das Gehäuse (16) U-förmig ist.

13. Vorrichtung (3) nach einem der vorhergehenden Ansprüche, **dadurch gekennzeichnet, dass** der Strömungssammler (8), das Verdampfungsmodul (9), die Mischkammer (11) und die Nachmischkammer (26) innerhalb des Gehäuses (16) der Vorrichtung (3) angeordnet sind.

14. Vorrichtung (3) nach einem der vorhergehenden Ansprüche, **dadurch gekennzeichnet, dass** der Strömungssammler (8), das Verdampfungsmodul (9) und die Mischkammer (11) einen einzigen Strömungsweg der Abgase (13) definieren.

15. Vorrichtung (3) nach einem der vorhergehenden Ansprüche, **dadurch gekennzeichnet, dass** sie ferner eine Auslasszone (23) umfasst, die sich zwischen der Mischkammer (11) und dem Auslass (15) der Abgase (13) befindet.

16. Vorrichtung (3) nach einem der vorhergehenden Ansprüche, **dadurch gekennzeichnet, dass** sie ferner ein Dosiermodul (20) zum Einbringen der Flüssigkeit in die Abgase (13) umfasst, das zwischen dem Einlass (14) der Abgase (13) und dem Verdampfungsmodul (9) angeordnet ist.

## Revendications

1. Dispositif (3) pour l'évaporation de pulvérisation de liquide et le mélange ultérieur dans les gaz d'échappement (13) d'un moteur à combustion comprenant un boîtier (16) qui comprend une entrée (14) des gaz d'échappement (13) et une sortie (15) des gaz d'échappement (13) agencées toutes les deux sur un même côté du boîtier (16), et comprenant en outre :
un collecteur de flux (8) pour diriger les gaz d'échappement (13) dans
un module d'évaporation (9),
et une chambre de mélange (11) située en aval du module d'évaporation (9),
le module d'évaporation (9) étant connecté de manière fluidique et donnant accès à un intérieur de la chambre de mélange (11),
la chambre de mélange (11) donnant accès à une chambre de post-mélange (26), la chambre de post-mélange (26) ayant un raccordement fluidique à la sortie (15) des gaz d'échappement (13),
dans lequel la chambre de mélange (11) est physiquement située entre la chambre de post-mélange (26) et la sortie (15) des gaz d'échappement (13), de sorte que le raccordement fluidique entre la chambre de post-mélange (26) et la sortie (15) entoure un extérieur de la chambre de mélange (11), et dans lequel la chambre de mélange (11) est agencée suivant la direction du flux de gaz d'échappement (13) provenant du module d'évaporation (9), **caractérisé en ce que** la chambre de mélange (11) est inclinée par rapport au boîtier (16).

2. Dispositif (3) selon la revendication 1, **caractérisé en ce que** la chambre de mélange (11) comprend un déflecteur tourbillonnaire (12) qui comprend une pluralité d'ouvertures faisant face à la sortie (15) des gaz d'échappement (13).

3. Dispositif (3) selon la revendication 2, **caractérisé en ce que** la pluralité d'ouvertures comprend des aubes de déviation radiales (24) et des aubes de déviation vers l'extérieur (25).

4. Dispositif (3) selon la revendication 3, **caractérisé en ce que** les aubes de déviation radiales (24) entourent les aubes de déviation vers l'extérieur (25).

5. Dispositif (3) selon la revendication 3 ou 4, **caractérisé en ce que** les aubes de déviation radiales et/ou vers l'extérieur (24, 25) sont disposées dans un agencement circonférentiel.

6. Dispositif (3) selon l'une quelconque des revendications précédentes, **caractérisé en ce que** la chambre de mélange (11) a une forme évasée étant plus étroite à proximité du module d'évaporation (9) et plus large à l'extrémité opposée.

7. Dispositif (3) selon la revendication 6, dans lequel les parois extérieures de la partie plus étroite de la chambre de mélange (11) définissent un passage de fluide pour les gaz d'échappement (13) entre la chambre de post-mélange (26) et la sortie (15).

8. Dispositif (3) selon l'une quelconque des revendications 2 à 7, **caractérisé en ce que** la chambre de mélange (11) comprend dans son intérieur une chambre de pré-mélange (33) située en aval du module d'évaporation (9) et en amont du déflecteur tourbillonnaire (12).

9. Dispositif (3) selon l'une quelconque des revendications précédentes, **caractérisé en ce que** la chambre de post-mélange (26) est située entre la chambre de mélange (11) et une paroi du boîtier (16).

10. Dispositif (3) selon l'une quelconque des revendications précédentes, **caractérisé en ce que** la forme de la chambre de post-mélange (26) est configurée pour conduire et accélérer le flux de gaz d'échappement (13) autour de l'extérieur de la chambre de mélange (11).

11. Dispositif (3) selon l'une quelconque des revendications précédentes, **caractérisé en ce que** le module d'évaporation (9) comprend une pluralité d'aubes d'évaporation parallèles (10) pour guider le flux de gaz d'échappement (13) vers la chambre de mélange (11) et pour servir de surface d'impact pour des gouttelettes de la pulvérisation de liquide et améliorer l'évaporation de la pulvérisation de liquide dans les gaz d'échappement (13).

12. Dispositif (3) selon l'une quelconque des revendications précédentes, **caractérisé en ce que** le boîtier (16) est en forme de U.

13. Dispositif (3) selon l'une quelconque des revendications précédentes, **caractérisé en ce que** le collecteur de flux (8), le module d'évaporation (9), la chambre de mélange (11) et la chambre de post-mélange (26) sont situés à l'intérieur du boîtier (16) du dispositif (3).

14. Dispositif (3) selon l'une quelconque des revendications précédentes, **caractérisé en ce que** le collecteur de flux (8), le module d'évaporation (9) et la chambre de mélange (11) définissent un seul chemin d'écoulement des gaz d'échappement (13).

15. Dispositif (3) selon l'une quelconque des revendications précédentes, **caractérisé en ce qu'**il comprend en outre une zone de sortie (23) située entre la chambre de mélange (11) et la sortie (15) des gaz d'échappement (13).

16. Dispositif (3) selon l'une quelconque des revendications précédentes, **caractérisé en ce qu'**il comprend en outre un module de dosage (20) pour insérer le liquide dans les gaz d'échappement (13) situé entre l'entrée (14) des gaz d'échappement (13) et le module d'évaporation (9).
